# EUROPÄISCHE PATENTSCHRIFT

(11) **EP 3 044 534 B1**
(45) Veröffentlichungstag und Bekanntmachung des Hinweises auf die Patenterteilung: **17.04.2019**
(21) Anmeldenummer: 14758576.4
(22) Anmeldetag: 04.09.2014
(51) Int. Cl.: F41H 5/013, F41H 7/00, F16B 37/04

(54) **MONTAGESYSTEM ZUR BEFESTIGUNG EINES ANBAUTEILES AN EINER C-SCHIENE**
ASSEMBLY SYSTEM FOR SECURING AN ATTACHMENT PART TO A C-RAIL
SYSTÈME DE MONTAGE POUR LA FIXATION D'UN ÉLÉMENT ANNEXE SUR UN RAIL EN FORME DE C

(30) Priorität: 13.09.2013 DE 102013015254
(43) Veröffentlichungstag der Anmeldung: 20.07.2016
(73) Patentinhaber: Rheinmetall MAN Military Vehicles GmbH, 80995 München (DE)
(72) Erfinder: ZERETZKE, Norbert, 37235 Hessisch Lichtenau (DE)
(74) Vertreter: Horn Kleimann Waitzhofer Patentanwälte PartG mbB
(86) Internationale Anmeldenummer: PCT/EP2014/068784
(87) Internationale Veröffentlichungsnummer: WO 2015/036306

(56) Entgegenhaltungen:
- EP-A1- 0 826 889
- EP-A2- 1 693 525
- DE-C1- 19 617 750
- GB-A- 1 138 757
- US-A- 5 201 487
- US-A1- 2002 048 495

## Beschreibung

Die Erfindung betrifft ein Sicherungselement für eine C-Schiene sowie ein Montagesystem zur Befestigung eines Anbauteils an der C-Schiene.

C-Schienen, bei denen an einer Grundplatte zwei seitlich angeordnete Schenkel und an diesen zwei voneinander beabstandete Umgriffsleisten angeordnet sind, werden üblicherweise zur austauschbaren Befestigung von An- oder Einbauteilen beispielsweise an einem Fahrzeug verwendet. Dabei wird an die an dem Fahrzeug fest angeordnete (angeschraubte oder angeschweißte) C-Schiene das jeweilige Anbauteil mittels eines eine Schraubverbindung umfassenden Montagesystems gegen die Außenflächen der beiden Umgriffsleisten der C-Schiene gepresst.

Als Schraubverbindung werden in der Regel eine Kopfschraube und eine im Innenraum der C-Schiene angeordnete Gleitmutter verwendet. Im Falle der bestimmungsgemäßen Verwendung des Montagesystems liegt dann der Schraubenkopf direkt oder über eine Zwischenscheibe außenseitig an dem Anbauteil an, und der Schraubenschaft erstreckt sich durch das Anbauteil hindurch und ist in die sich an den Innenflächen der Umgriffsleisten der C-Schiene abstützende Gleitmutter eingeschraubt.

Alternativ kann als Schraubverbindung auch eine Hammerkopfschraube und eine Mutter verwendet werden. Dabei stützt sich im Falle der bestimmungsgemäßen Verwendung des Montagesystems der Schraubenkopf der Hammerkopfschraube an den Innenflächen der Umgriffsleisten der C-Schiene ab, während der Schraubenschaft in die außenseitig sich an dem Anbauteil direkt oder über eine Zwischenscheibe abstützende Mutter eingeschraubt ist.

Als nachteilig hat es sich bei derart bekannten Montagesystemen erwiesen, dass sich die im Handel üblichen C-Schienen unter Last, insbesondere hohen Lasten, relativ leicht aufbiegen können und die Anbauteile dann zusammen mit der Schraubverbindung aus der C-Schiene herausgerissen werden.

Um ein derartiges Aufbiegen der C-Schienen unter Last zu erschweren, sind C-Schienen bekannt geworden, bei denen die Umgriffsleisten jeweils einen zum Innenraum der C-Schiene gerichteten schrägen Verlauf aufweisen. Die in diesem Fall verwendeten Montagesysteme umfassen ein zwischen der Gleitmutter oder dem Kopf der Hammerkopfschraube und dem Anbauteil angeordnetes Zwischenteil (Gegenstück), wobei die Gleitmutter oder der Schraubenkopf der Hammerkopfschraube und das Zwischenteil auf ihren den Umgriffsleisten zugewandten Seiten eine den Umgriffsleisten angepasste Kontur besitzen. Beim Verbinden des Anbauteiles mit der C-Schiene werden dann gleichzeitig auch die Umgriffsleisten zwischen der Gleitmutter oder dem Kopf der Hammerkopfschraube und dem Gegenstück eingeklemmt.

Auch bei diesen Montagesystemen hat sich in der Praxis gezeigt, dass ein Aufbiegen der C-Schiene unter hohen Lasten, die gegebenenfalls auch noch mit einem schnellen Richtungswechsel verbunden sind, erfolgen kann.

Die DE 196 17 750 C1 zeigt eine Verankerungseinheit zur Befestigung von Rohren oder dergleichen Gegenständen, mit einem Stützteil, welches in eine Montageöffnung eines Hohlkörpers einführbar und im Hohlkörper-Inneren derart verdrehbar ist, dass das Stützteil an gegenüberliegenden Hohlkörper-Längsseiten innenseitig vorgesehene Haltevorsprünge hintergreift, sowie mit einem Gegenhalter, welcher die die Montageöffnung begrenzenden Ränder der Hohlkörper-Längsseiten stirnaußenseitig beaufschlagt und welcher mit dem Stützteil drehbar verbunden ist.

Die GB 1 138 757 A beschreibt Blechprofilstangen, die im Querschnitt zwei freie Enden aufweisen, die in einem Winkel von 60 Grad bis 120 Grad angeordnet sind, und die aneinander befestigt sind, um Regalböden zu stützen. Es ist ferner ein Verbindungselement vorgesehen, wobei die freien Enden durch Bolzen zwischen äußeren Klemmelementen an dem Element und inneren Klemmelementen, die innerhalb der Stangen angeordnet sind, geklemmt werden.

Die US 5 201 487 A zeigt ein Adaptersystem zum Montieren eines Zubehörs auf einem Dach mit Schienenbefestigung. Das System umfasst mehrere Adapteranordnungen, die jeweils ein extrudiertes Klammerelement mit einer ebenen Bodenfläche zum Anpassen einer oberen Fläche einer Montageschiene und einen Randbereich mit ersten und gegenüberliegenden Schulterbereichen zum sicheren Greifen durch ein herabhängendes Strebelement und ein hakenförmiges Element umfassen und einen Teil eines Greifmittels in einem Dachzubehör- oder Zubehörträger bilden.

Die EP 0 826 889 A1 beschreibt ein Befestigungselement für Profilschienen, die einen im wesentlichen C-förmigen Querschnitt besitzen und eine in Längsrichtung verlaufende, schlitzartige Öffnung aufweisen, die von einander zugewandten freien Enden zweier parallel zueinander ausgerichteter Schenkel berandet ist. Das Befestigungselement umfasst eine Schienenmutter, die bei parallel zu der Längserstreckung der Öffnung verlaufenden Längsseiten durch die schlitzartige Öffnung in das Innere der Profilschiene einführbar ist und innerhalb der Profilschiene derart verdrehbar ist, dass ihre Längserstreckung, die grösser ist als eine Weite der schlitzartigen Öffnung, die Öffnung überbrückt, und eine Klemmplatte, die die Schienenmutter wenigstens bereichsweise überragt und in einem axialen Abstand von der Schienenmutter angeordnet ist.

Der Erfindung liegt die Aufgabe zugrunde, ein Montagesystem anzugeben, mit dem Anbauteile an einer C-Schiene befestigbar sind, wobei ein Aufbiegen der C-Schiene unter hoher Last vermieden wird oder gegenüber bekannten Montagesystemen wesentlich erschwert wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, ein bügelförmiges Sicherungselement zu verwenden, welches bei der bestimmungsgemäßen Verwendung des Montagesystems zwischen dem Anbauteil und den Umgriffsleisten derart angeordnet ist, dass die beiden Schenkel des bügelförmigen Sicherungselementes mindestens teilweise die beiden seitlich angeordneten Schenkel der C-Schiene außenseitig umgreifen und dadurch ein Aufbiegen der C-Schiene unter Last verhindern oder mindestens wesentlich erschweren. Der zusätzlich eingebundene "Überwurf" umklammert die C-Schiene vorzugsweise lokal und stützt die seitlichen Schenkel der C-Schiene. Es können auch mehrere Überwürfe bzw. Sicherungselemente über die Länge der C-Schiene verteilt angebracht werden, auch an Stellen, wo kein Anbauteil vorgesehen ist. Diese Maßnahme kann die Stabilität der C-Schiene über ihre Länge erhöhen.

Das Sicherungselement muss dabei aus einem Material entsprechender Festigkeit (beispielsweise Stahl) bestehen und eine Wandstärke aufweisen, die eine ausreichende Biegesteifigkeit sicherstellt.

Nicht zwingend erforderlich ist es, dass die Schenkel des Sicherungselementes und die Schenkel der C-Schiene sich berühren, sondern es kann durchaus für die Montage vorteilhaft sein, wenn ein geringes Spiel zwischen diesen Teilen besteht und das Sicherungselement erst dann seine Wirkung ausübt, wenn die Schenkel der C-Schiene sich geringfügig aufgebogen haben.

Als Schraubverbindungen können beispielsweise wiederum eine Kopfschraube mit Gleitmutter oder eine Hammerkopfschraube mit einer einfachen Mutter verwendet werden.

Das erfindungsgemäße Montagesystem kann auch bei C-Schienen mit Umgriffsleisten verwendet werden, die jeweils einen zum Innenraum der C-Schiene gerichteten schrägen Verlauf aufweisen und bei denen beim Verbinden des Anbauteiles mit der C-Schiene gleichzeitig auch die Umgriffsleisten zwischen der Gleitmutter oder dem Kopf der Hammerkopfschraube und dem Gegenstück eingeklemmt werden.

Weitere Einzelheiten und Vorteile der Erfindung ergeben sich aus den folgenden, anhand von Figuren erläuterten Ausführungsbeispielen. Es zeigen:
- Fig. 1: den Querschnitt durch eine C-Schiene, an der ein Anbauteil mittels eines ersten Ausführungsbeispieles eines erfindungsgemäßen Montagesystems befestigt ist;
- Fig. 2: eine Fig. 1 entsprechende Ansicht, mit einem zweiten Ausführungsbeispiel eines erfindungsgemäßen Montagesystems.

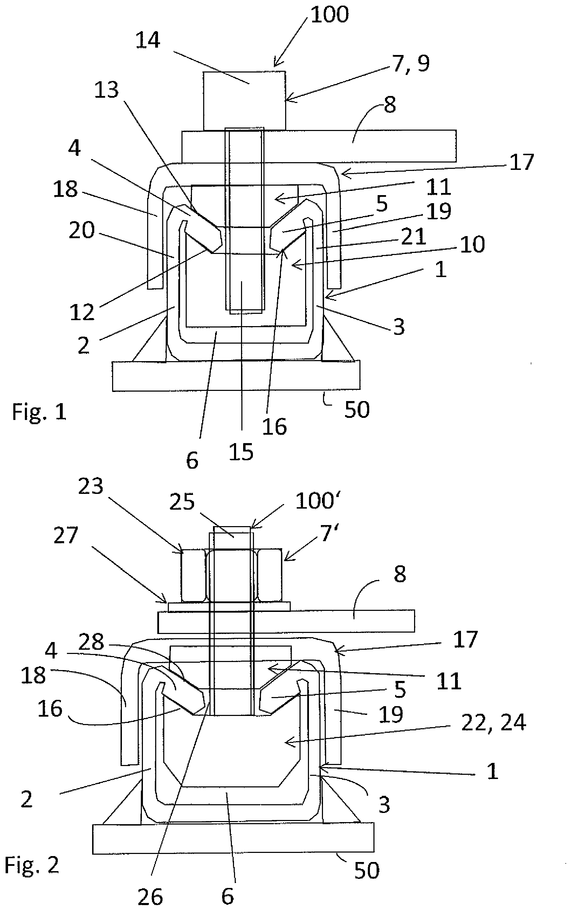

In Fig. 1 ist mit 1 eine C-Schiene bezeichnet, die beispielsweise an einem Fahrzeug (Fahrzeuggehäuse / Fahrzeugwanne 50) angeschweißt, angeschraubt etc. ist. Die C-Schiene 1 besitzt zwei seitlich angeordnete Schenkel 2, 3 und zwei an den Schenkeln 2, 3 angeordnete, voneinander beabstandete Umgriffsleisten 4, 5. Dabei weisen die Umgriffsleisten 4, 5 jeweils einen zum Innenraum 6 der C-Schiene 1 gerichteten schrägen Verlauf auf.

An der C-Schiene 1 ist mit Hilfe eines eine Schraubverbindung 7 umfassenden Montagesystems 100 ein Anbauteil 8 befestigt. Dabei besteht die Schraubverbindung 7 im Wesentlichen aus einer Kopfschraube 9 und einer Gleitmutter 10 sowie einem Zwischenteil 11. Die Gleitmutter 10 und das Zwischenteil 11 besitzen auf ihren den Umgriffsleisten 4, 5 zugewandten Seiten jeweils eine den Umgriffsleisten 4, 5 angepasste, schräg verlaufende Kontur 12, 13.

Der Schraubenkopf 14 liegt außenseitig an dem Anbauteil 8 an, während der Schraubenschaft 15 der Kopfschraube 9 durch das Anbauteil 8 und das Zwischenteil 11 hindurchgeführt und in die sich an den Innenflächen 16 der Umgriffsleisten 4, 5 der C-Schiene 1 abstützenden Gleitmutter 10 eingeschraubt ist.

Erfindungsgemäß ist nun vorgesehen, dass das Montagesystem 100 zusätzlich zu der Schraubverbindung 7 ein bügelförmiges Sicherungselement 17 umfasst, welches durch die Schraubverbindung 7 zwischen dem Anbauteil 8 und dem Zwischenteil 11 fixiert wird. Dabei umgreifen die beiden Schenkel 18, 19 des bügelförmigen Sicherungselementes 17 obere Teilbereiche 20, 21 der beiden seitlich angeordneten Schenkel 2, 3 der C-Schiene 1 außenseitig und verhindern damit ein Aufbiegen der seitlichen Schenkel 2, 3 der C-Schiene 1 unter Last. Der Schenkel 8 als auch das Sicherungselement 17 können einteilig oder fest miteinander verbunden sein. Diese Montageerleichterung kann auch auf das Zwischenteil 11 erweitert werden, so dass in der bevorzugten Ausführung der Schenkel 8, das Zwischenteil 11 und das Sicherungselement 17 einteilig, zumindest aber fest miteinander verbunden sind.

Fig. 2 zeigt ein Fig. 1 entsprechendes Ausführungsbeispiel, bei dem das Montagesystem 100' eine aus Hammerkopfschraube 22 und Mutter 23 bestehende Schraubverbindung 7' umfasst. Der Schraubenkopf 24 der Hammerkopfschraube 22 stützt sich an den Innenflächen 16 der Umgriffsleisten 4, 5 der C-Schiene 1 ab, und der Schraubenschaft 25 ist durch den zwischen den beiden Umgriffsleisten 4, 5 befindlichen Spalt 26, das Zwischenteil 11, das Sicherungselement 17 und das Anbauteil 8 hindurchgeführt und in die außenseitig sich an dem Anbauteil (Schenkel) 8 über eine Zwischenscheibe 27 abstützende Mutter 23 eingeschraubt.

Prinzipiell kann das Montagesystem 100, 100' auch ohne Anbauteil 8 als Sicherung für die C-Schiene als solche dienen. Hierbei dient das Sicherungselement 17 für eine C-Schiene 1. Das bügelförmige Sicherungselement 17 umfasst mit den zwei Schenkeln 18, 19 die zwei seitlich angeordneten Schenkel 2, 3 und die zwei voneinander beabstandete Umgriffsleisten 4, 5 der C-Schiene 1 mindestens teilweise außenseitig. Das Sicherungselement 17 kann über die Schraubverbindung 7, 7' wie im Montagesystem 100, 100' beschrieben, mit der C-Schiene 1 verbunden, d.h., befestigt werden. Auch hier kann die Schraubverbindung 7, 7' eine Kopfschraube 9 und eine Gleitmutter 10 bzw. eine Hammerkopfschraube 22 und eine Mutter 23 umfassen. Da die Umgriffsleisten 4, 5 jeweils einen zum Innenraum 6 der C-Schiene 1 gerichteten schrägen Verlauf aufweisen, wird zwischen der Gleitmutter 10 oder dem Schraubenkopf 24 der Hammerkopfschraube 22 und dem Sicherungselement 17 ein Zwischenteil 11 angeordnet, wie auch bei dem Montagesystem 100, 100' (keine separate Darstellung, da aus den Fig. entnehmbar).

### Bezugszeichenliste

- 1: C-Schiene
- 2, 3: Schenkel (C-Schiene)
- 4, 5: Umgriffsleisten
- 6: Innenraum
- 7, 7': Schraubverbindungen
- 8: Anbauteil
- 9: Kopfschraube
- 10: Gleitmutter
- 11: Zwischenteil
- 12, 13: Konturen
- 14: Schraubenkopf
- 15: Schraubenschaft
- 16: Innenfläche
- 17: Sicherungselement
- 18, 19: Schenkel (Sicherungselement)
- 20,21: Teilbereiche
- 22: Hammerkopfschraube
- 23: Mutter
- 24: Schraubenkopf
- 25: Schraubenschaft
- 26: Spalt
- 27: Zwischenscheibe
- 28: Außenfläche

- 50: Fahrzeuggehäuse / Wanne

- 100, 100': Montagesysteme

## Patentansprüche

1. Montagesystem (100, 100') zur Befestigung eines Anbauteiles (8) an einer C-Schiene (1), die zwei seitlich angeordnete Schenkel (2, 3) und zwei dem Anbauteil (8) zugewandte, voneinander beabstandete Umgriffsleisten (4, 5), die jeweils einen zu einem Innenraum (6) der C- Schiene (1) gerichteten schrägen Verlauf mit Außenflächen (28) umfassen, aufweist, wobei das Montagesystem (100, 100') aufweist:
ein Sicherungselement (17), das bügelförmig ist und zwei Schenkel (18, 19) umfasst, die die zwei seitlich angeordneten Schenkel (2, 3) und die zwei voneinander beabstandeten Umgriffsleisten (4, 5) der C-Schiene (1) mindestens teilweise außenseitig umgreifen, und
eine Schraubverbindung (7; 7'), die eine Kopfschraube (9) und eine Gleitmutter (10) oder eine Hammerkopfschraube (22) und eine Mutter (23) umfasst, wobei die Schraubverbindung (7; 7') ein zwischen der Gleitmutter (10) oder dem Schraubenkopf (24) der Hammerkopfschraube (22) und dem Sicherungselement (17) angeordnetes Zwischenteil (11) aufweist,
wobei das Zwischenteil (11) mittels der Schraubverbindung (7; 7') gegen die Außenflächen (28) der beiden Umgriffsleisten (4, 5) der C-Schiene (1) angepresst ist,
wobei die Gleitmutter (10) oder der Schraubenkopf (24) der Hammerkopfschraube (22) und das Zwischenteil (11) auf ihren den Umgriffsleisten (4, 5) zugewandten Seiten eine den Umgriffsleisten (4, 5) angepasste Kontur (12, 13) besitzen,
wobei das Sicherungselement (17) über die Schraubverbindung (7, 7') mit der C- Schiene (1) verbunden ist, und
wobei das Sicherungselement (17) bei der bestimmungsgemäßen Verwendung des Montagesystems (100; 100') zwischen dem Anbauteil (8) und den Umgriffsleisten (4, 5) angeordnet ist, so dass die beiden Schenkel (18, 19) des bügelförmigen Sicherungselementes (17) mindestens teilweise die beiden seitlich angeordneten Schenkel (2, 3) der C-Schiene (1) außenseitig umgreifen.

2. Montagesystem (100) nach Anspruch 1, **dadurch gekennzeichnet, dass** die Schraubverbindung (7) eine Kopfschraube (9) und eine Gleitmutter (10) umfasst, wobei im Falle der bestimmungsgemäßen Verwendung des Montagesystems (100) der Schraubenkopf (14) der Kopfschraube (9) direkt oder über eine Zwischenscheibe außenseitig an dem Anbauteil (8) anliegt und ein Schraubenschaft (15) der Kopfschraube (9) durch das Anbauteil (8) und durch das Sicherungselement (17) hindurchgeführt ist und in die sich an den Innenflächen (16) der Umgriffsleisten (4, 5) der C-Schiene (1) abstützende Gleitmutter (10) eingeschraubt ist.

3. Montagesystem (100') nach Anspruch 1 oder 2, **dadurch gekennzeichnet, dass** die Schraubverbindung (7') eine Hammerkopfschraube (22) und eine Mutter (23) umfasst, wobei im Falle der bestimmungsgemäßen Verwendung des Montagesystems (100') der Schraubenkopf (24) der Hammerkopfschraube (22) sich an Innenflächen (16) der Umgriffsleisten (4, 5) der C-Schiene (1) abstützt und ein Schraubenschaft (25) der Hammerkopfschraube (22) durch einen zwischen den beiden Umgriffsleisten (4, 5) befindlichen Spalt (26) und durch das Anbauteil (8) hindurchgeführt und in die außenseitig sich an dem Anbauteil (8) direkt oder über eine Zwischenscheibe (27) abstützende Mutter (23) eingeschraubt ist.

4. Fahrzeug mit einem Montagesystem (100, 100') nach einem der Ansprüche 1 bis 3.

## Claims

1. Assembly system (100, 100') for securing an attachment part (8) to a C-rail (1), which has two laterally arranged limbs (2, 3) and two surrounding strips (4, 5) which face the attachment part (8) and which are arranged at a distance from each other and which respectively comprise a slanting variation with outer surfaces (28) which is aligned to an inner space (6) of the C-rail (1), wherein the assembly system (100, 100') comprises:
a securing element (17) which is bow-shaped and which comprises two limbs (18, 19) which engage around the two laterally arranged limbs (2, 3) and the two surrounding strips (4, 5) of the C-rail (1) which space apart from each other at least partially at the outer space, and
a screw connection (7; 7') which comprises a head screw (9) and a slide nut (10) or a hammer head screw (22) and a nut (23), wherein the screw connection (7; 7') comprises an intermediate part (11) which is arranged between the slide nut (10) or the screw head (24) of the hammer head screw (22) and the securing element (17),
wherein the intermediate part (11) is pressed by means of the screw connection (7; 7') against the outer surfaces (28) of the both surrounding strips (4, 5) of the C-rail (1),
wherein the slide nut (10) or the screw head (24) of the hammer head screw (22) and the intermediate part (11) have on their sides which face the surrounding strips (4, 5) a contour (12, 13) which matches to the surrounding strips (4, 5),
wherein the securing element (17) is connected to the C-rail (1) via the screw connection (7, 7'), and
wherein, at the intended use of the assembly system (100; 100'), the securing element (17) is arranged between the attachment part (8) and the surrounding strips (4, 5), so that the both limbs (18, 19) of the bow-shaped securing element (17) are at least partially engaging around the both laterally arranged limbs (2, 3) of the C-rail (1) on the outer side.

2. Assembly system (100) according to claim 1, **characterized in that** the screw connection (7) comprises a head screw (9) and a slide nut (10), wherein, in case of the intended use of the assembly system (100), the screw head (14) of the head screw (9) lies on directly or via an intermediate slit at the outer side of the attachment part (8) and a screw shaft (15) of the head screw (9) is guided through the attachment part (8) and through the securing element (17) and is screwed into the slide nut (10) which is bearing on the inner surfaces (16) of the surrounding strips (4, 5) of the C-rail (1).

3. Assembly system (100') according to claim 1 or 2, **characterized in that** the screw connection (7') comprises a hammer head screw (22) and a nut (23), wherein, in case of the intended use of the assembly system (100'), the screw head (24) of the hammer head screw (22) bears on inner surfaces (16) of the surrounding strips (4, 5) of the C-rail (1) and a screw shaft (25) of the hammer head screw (22) is guided through a gap (26) which is located between both surrounding strips (4, 5) and through the attachment part (8) and is screwed into the nut (23) which is directly bearing on the outer side of the attachment part (8) or bearing via an intermediate part (27).

4. Vehicle with an assembly system (100, 100') according to any of the claims 1 to 3.

## Revendications

1. Système d'assemblage (100, 100') destiné à fixer une partie d'équipement (8) à un rail en C (1), qui comporte deux branches disposées latéralement (2, 3) et deux bandes d'entourage (4, 5) qui font face à la partie d'équipement (8) et qui sont disposées à une certaine distance l'une de l'autre et qui comprennent respectivement une variation de pente à surfaces extérieures (28) qui sont alignées sur un espace intérieur (6) du rail en C (1), dans lequel le système d'assemblage (100, 100') comprend :
un élément de fixation (17) en forme d'arc et comprenant deux branches (18, 19) qui coopèrent autour des deux branches disposées latéralement (2, 3) et des deux bandes d'entourage (4, 5) du rail en C (1) qui sont espacées les unes des autres au moins partiellement au niveau de l'espace extérieur, et
une liaison à vis (7 ; 7') qui comprend une vis (9) à tête et un écrou-coulisseau (10) ou une vis à tête rectangulaire (22) et un écrou (23), dans lequel la liaison à vis (7 ; 7') comprend une partie intermédiaire (11) qui est disposée entre l'écrou-coulisseau (10) ou la tête (24) de vis de la vis à tête rectangulaire (24) et l'élément de fixation (17),
dans lequel la partie intermédiaire (11) est pressée au moyen de la liaison à vis (7 ; 7') contre les surfaces extérieures (28) des deux bandes d'entourage (4, 5) du rail en C (1),
dans lequel les côtés de l'écrou-coulisseau (10) ou de la tête (24) de vis de la vis à tête rectangulaire (22) et de la partie intermédiaire (11) dont un contour (12, 13) correspond aux bandes d'entourage (4, 5) font face aux bandes d'entourage (4, 5),
dans lequel l'élément de fixation (17) est relié au rail en C (1) par le biais de la liaison à vis (7 ; 7'), et
dans lequel, lors de l'utilisation attendue du système d'assemblage (100 ; 100'), l'élément de fixation (17) est disposé entre la partie d'équipement (8) et les bandes d'entourage (4, 5), de sorte que les deux branches (18, 19) de l'élément de fixation (17) en forme d'arc coopèrent au moins partiellement autour des deux branches disposées latéralement (2, 3) du rail en C (1) du côté extérieur.

2. Système d'assemblage (100) selon la revendication 1, **caractérisé en ce que** la liaison à vis (7) comprend une vis (9) à tête et un écrou-coulisseau (10), dans lequel, dans le cas de l'utilisation attendue du système d'assemblage (100), la tête (14) de vis de la vis (9) à tête se trouve directement, ou par le biais d'une fente intermédiaire, au niveau du côté extérieur de la partie d'équipement (8) et une tige filetée (15) de la vis (9) à tête est guidée à travers la partie d'équipement (8) et à travers l'élément de fixation (17) et est vissée dans l'écrou-coulisseau (10) qui appuie sur les surfaces intérieures (16) des bandes d'entourage (4, 5) du rail en C (1).

3. Système d'assemblage (100') selon la revendication 1 ou la revendication 2, **caractérisé en ce que** la liaison à vis (7') comprend une vis à tête rectangulaire (22) et un écrou (23), dans lequel, dans le cas de l'utilisation attendue du système d'assemblage (100'), la tête (24) de vis de la vis à tête rectangulaire (22) appuie sur des surfaces intérieures (16) des bandes d'entourage (4, 5) du rail en C (1) et une tige filetée (25) de la vis à tête rectangulaire (22) est guidée à travers un espace (26) qui se trouve entre les deux bandes d'entourage (4, 5) et à travers la partie d'équipement (8) et est vissée dans l'écrou (23) qui appuie directement sur le côté extérieur de la partie d'équipement (8) ou qui appuie par le biais d'une partie intermédiaire (27).

4. Véhicule doté d'un système d'assemblage (100, 100') selon l'une quelconque des revendications 1 à 3.
